# EUROPÄISCHE PATENTANMELDUNG

(11) **EP 2 570 345 A1**
(43) Veröffentlichungstag der Anmeldung: **20.03.2013**
(21) Anmeldenummer: 12006479.5
(22) Anmeldetag: 14.09.2012
(51) Int. Cl.: B64C 27/28, B64C 29/00

(54) **Fluggerät**

(30) Priorität: 16.09.2011 DE 102011113731
(71) Anmelder: EMT Ingenieurgesellschaft Dipl.-Ing. Hartmut Euer mbH, 82377 Penzberg (DE)
(72) Erfinder: Euer, Hartmut, Dipl.-Ing., 82402 Seeshaupt (DE); Wernicke, Joachim, Prof. Dr.-Ing., 14167 Berlin (DE)
(74) Vertreter: Volpert, Marcus

(57) **Zusammenfassung**

Die Erfindung betrifft ein Fluggerät mit zumindest einer Tragfläche (2) und mindestens drei, eine vertikale Schubrichtung aufweisenden Triebwerken (5) und ist durch eine Steuerungseinheit (12) gekennzeichnet, die eine Störung von zumindest einem der Triebwerke (5) erkennt und die Leistung der intakten Triebwerke (5) zum Ausgleich des gestörten Triebwerks (5) regelt.

## Beschreibung

Die Erfindung betrifft ein Fluggerät mit zumindest einer Tragfläche und schuberzeugenden Triebwerken, die, vorzugsweise durch Verschwenken, eine vertikale Schubrichtung aufweisen.

Fluggeräte mit Tragflächen werden als sogenannte Starrflügler bezeichnet. Diese werden durch den aerodynamischen Auftrieb ihrer Tragflächen infolge ihrer Horizontalgeschwindigkeit getragen, welche durch einen mit horizontaler Schubkraft wirkenden Antrieb erzeugt und aufrechterhalten wird. Sofern die Fluggeschwindigkeit nur einen Bruchteil der Schallgeschwindigkeit erreicht, ist die Schuberzeugung durch rotierende Luftschrauben (Propeller) gebräuchlich, die ihrerseits üblicherweise durch Verbrennungsmotoren (Hubkolbenmotoren oder Gasturbinen) angetrieben werden.

Innerhalb der Kategorie der Starrflügler wird zwischen Motorflugzeugen und Motorseglern unterschieden, wobei die Unterscheidung infolge der sogenannten Gleitzahl erfolgt. Die Gleitzahl ist der reziproke Gleitwinkel (im Bogenmaß) im antriebslosen Gleitflug. Als Motorflugzeuge gelten dabei Starrflügler mit Gleitzahlen ≤ ca. 20 und als Motorsegler solche mit Gleitzahlen ≥ ca. 20.

Motorsegler sind infolge ihrer verlustarmen aerodynamischen Umströmung diejenige Flugzeugkonfiguration mit der sparsamsten Verwendung von Antriebsenergie, d.h. sie erlauben bei gegebenem Energievorrat die längsten Flugdauern. Unbemannte Fluggeräte für die luftgestützte Bodenbeobachtung sind deshalb meist als Motorsegler realisiert.

Der wesentliche Nachteil von Starrflüglern ist die Notwendigkeit einer Start- und Landebahn, da diese zum Start eine Mindest-Horizontalgeschwindigkeit benötigen und bei der Landung im nahezu horizontalen Anflug die Horizontalgeschwindigkeit durch rollende oder gleitende Abbremsung auf einer Landebahn abgebaut werden muss (bei Motorseglern meist unterstützt durch technische Maßnahmen zur Erhöhung des Luftwiderstands).

Wenn die Notwendigkeit einer Start- und Landebahn vermieden werden soll, ist die Verwendung von sogenannten Drehflüglern gebräuchlich, insbesondere in der Bauform des konventionellen Hubschraubers mit einem tragenden Hauptrotor. Drehflügler weisen den Nachteil hohen Antriebsenergiebedarfs auf, der darin begründet ist, dass sämtliche Auftriebsleistung von der Antriebsvorrichtung aufgebracht werden muss.

Um die energetischen Vorteile eines Starrflüglers (mit in etwa horizontaler Antriebsschubrichtung) mit den einsatzpraktischen Vorteilen des Drehflüglers (mit in etwa vertikaler Antriebsschubrichtung) zu kombinieren, bestehen seit langem Ansätze, Kombinationen aus beiden Bauformen zu entwickeln, indem bei einem als Starrflügler konzipierten Fluggerät die Antriebsrotoren bei Start und Landung um quer zur Längsachse des Fluggeräts liegende Drehachsen rotiert werden.

Die erste Patentanmeldung hierzu datiert aus dem Jahr 1920 durch Claude Dornier. Die technischen Voraussetzungen für die tatsächliche Realisierung waren allerdings erst Jahrzehnte später gegeben: 1955 flog erstmals ein senkrecht start- und landefähiges Fluggerät mit zwei Schwenkpropellern, die Bell XV-3. Die technischen Anforderungen an die Lagestabilisierung bzw. die Genauigkeit der Schwerpunktlage im Schwebeflug eines solchen Fluggeräts mit zwei Schwenkpropellern sind extrem hoch. Die Stabilisierung kann jedoch erheblich vereinfacht werden, wenn mindestens ein dritter, zumindest mit vertikaler Schubrichtung wirkender, eventuell zusätzlich verschwenkbarer Propeller vorgesehen wird, wobei die dann mindestens drei Propeller eine etwa horizontale Ebene aufspannen. Die erste Realisierung dieser Überlegung flog 1965, die Canadair CL-84, bei der die beiden Hauptpropeller zugleich mit der Tragfläche verschwenkt wurden und ein dritter, mit vertikaler Schubrichtung wirkender, kleiner Propeller am Heck angebracht war. Eine weitere konsequente Realisierung der Überlegung war das Flugzeug Bell X-22A, dass 1966 erstmals flog: ein Fluggerät mit vier Schwenkpropellern, die ein Trapez aufspannten.

Trotz dieses prinzipiell guten Grundgedankens konnten sich solche Multi-Schwenkpropeller-Fluggeräte nicht durchsetzen, weil ihre Antriebstechnik mit einem im Rumpf befindlichen Hubkolben- oder Gasturbinenmotor und Langwellen zu allen Propellern zu aufwändig war.

Die sich aus dieser Problematik entwickelnde Idee, jedem Schwenktriebwerk eine eigene, mitgeschwenkte Motoreinheit zuzuordnen, konnte nicht vor den 1960er Jahren realisiert werden, nachdem - in Form von Strahltriebwerken - Triebwerke zur Verfügung standen, die bei ausreichend kleinem Gewicht die erforderlichen Schubkräfte aufbringen konnten. Ein Beispiel ist der Senkrechtstarter Entwicklungsring Süd VJ-101c, der mit zwei schwenkbaren Strahltriebwerken an den Tragflächenenden ausgestattet war und 1963 seinen Erstflug absolvierte.

Auch mit Strahl- anstelle von Propellertriebwerken wurde in jener Zeit die erwähnte Überlegung realisiert, dass ein drittes, mit den anderen beiden eine Fläche aufspannendes Triebwerk die Lagesteuerung wesentlich vereinfacht. Ein Beispiel ist das Senkrechtsstartflugzeug Yakolew YAK-38, das 1971 erstmals flog: Zwei Schwenkdüsen im Heck wurden durch ein drittes, nur mit vertikaler Schubrichtung wirkendes Triebwerk unterstützt.

Erst als in den 1990er Jahren die Leistungsdichte von Gasturbinen so weit entwickelt war, dass auch schubstarke turbinengetriebene Propellereinheiten in kompakter Bauform möglich wurden, erlebte das Schwenkpropeller-Flugzeug eine Renaissance.

Die derzeit übliche Bauform ist die Anbringung von je einem Kipprotor mit Gasturbinen-Antrieb an den Enden der beiden Tragflächen (z.B. Boeing-Bell MV-22 "Osprey", Erstflug 1989). Diese Bauform führt jedoch zu hohen statischen Anforderungen an die Konstruktion der Tragflächen, somit zu relativ kleinen Flügelstreckungen und in Folge dessen zu begrenzten aerodynamischen Flugleistungen. Weiterhin können durch die große Entfernung zwischen den beiden an den Tragflächenenden angeordneten Antriebsrotoren folgenschwere Unfälle bei Störung eines der Triebwerke oder des verbindenden Antriebsstrangs während des Starts und der Landung erfolgen.

Die technischen Fortschritte bei Elektromotoren hoher Leistungsdichte (vorrangig ermöglicht durch neue Permanentmagnetmaterialien) erlaubt es heutzutage, leichte unbemannte Fluggeräte sowie kleine bemannte Starrflügler mit elektrischen Propellerantrieben auszurüsten. Dadurch kann eine wesentliche Reduzierung des Fluglärms erreicht werden. Bemannte Hochleistungs-Motorsegler mit Elektroantrieb und Stromversorgung über Batterien, Brennstoffzellen oder Bordstromaggregate sind aktueller Gegenstand von Forschung und Entwicklung und sind bereits erfolgreich über große Strecken und lange Flugdauern erprobt worden (z.B. die Motorsegler DLR Antares H2 mit Brennstoffzellen-Stromversorgung, Erstflug 2009, und das Modell "E-Genius" der Universität Stuttgart mit Batterie-Stromversorgung, Erstflug 2011).

Durch die hohe Leistungsdichte moderner Elektromotoren lag es nahe, auch Schwenkpropeller-Fluggeräte zu realisieren, bei denen jede schwenkbare Propellereinheit einen eigenen Elektromotor aufweist. Eine gebräuchliche Anwendung besteht im Flugzeugmodellbau von kunstflugfähigen, elektrisch angetriebenen Flugzeugen: die Propellerschwenkung erfolgt in einem kleinen Winkelbereich (einige Grad), um durch Schubvektorsteuerung eine erhöhte Manövrierfähigkeit im Kunstflug zu erreichen.

Als Nachvollzug der aus den 1960er Jahren bekannten Schwenkpropeller-Flugzeuge, lediglich mit elektrischem Antrieb statt Gasturbinen-Antrieb, sind ferner Schwenkpropeller-Flugzeuge für unbemannte Beobachtungsaufgaben als in Entwicklung befindlich berichtet, insbesondere die mit drei Rotoren ausgestatteten Fluggeräte IAI "Panther" und "Mini Panther", die 2010 als Portotypen vorgestellt wurden.

Weiterhin ist für lokale Luftbeobachtungsanwendungen ein Markt von vertikal startenden und landenden, unbemannten Kleinfluggeräten entstanden. Diese sind teils in der Bauart konventioneller Hubschrauber realisiert, d.h. mit achsenfestem, aber blattverstellbarem Hauptrotor oder nicht-verstellbarem Doppel-Koaxialrotor mit Steuer-Hilfsrotoren. Zunehmend werden solche Kleinfluggeräte jedoch auch als sogenannte Multirotor-Konfigurationen realisiert, indem mindestens drei unabhängige Elektromotor-Propeller-Kombinationen ("Rotoren") mit vertikalen Drehachsen, ungefähr eine horizontale Ebene aufspannend, zellenfest montiert sind. Bei dieser Konfiguration kann allein durch eine individuelle Variation der Rotordrehzahlen die Fluglage und somit die Schubkraftrichtung geändert und dadurch das Fluggerät gesteuert werden. Zwei häufig anzutreffende Anordnungen dieser Art umfassen drei Rotoren, als Tricopter" bezeichnet, und vier Rotoren, als "Quadrokopter" bezeichnet.

Der Hauptvorteil einer Multirotor-Konfiguration ist die mechanische Einfachheit, da auf die mechanisch komplexen Blattverstellungs-Rotorköpfe oder Koaxialrotor-Wellenführungen von Hubschraubern verzichtet werden kann und statt dessen lediglich die elektrischen Ströme, mit denen die die Propeller antreibenden Elektromotoren angesteuert werden, verändert werden. Solche Multirotor-Fluggeräte verfügen nicht über Tragflächen, da diese die Luftströmung der Propeller behindern würden, und haben somit keine Fähigkeit zum antriebslosen, aerodynamischen Gleitflug; abgesehen von einer eventuell vorhandenen Restauftriebswirkung der antriebslosen, d.h. in Autorotation drehenden Rotoren. Deshalb sind die genannten Multirotor-Konfigurationen in der Nutzung der Antriebsenergie den Starrflüglern und insbesondere den Motorseglern weit unterlegen. Dieser Nachteil wird jedoch angesichts der konstruktiven und einsatzpraktischen Vorteile der Multirotor-Konfigurationen bewusst hingenommen.

Ein Problem ist jedoch, dass bei derzeitigen Multirotor-Konfigurationen eine Störung an einem der Rotoren zum Verlust der Steuerbarkeit und folglich zum Absturz des Fluggeräts führen kann.

Ausgehend von diesem Stand der Technik lag der Erfindung die Aufgabe zugrunde, ein verbessertes Fluggerät in Form eines sogenannten Kipprotor-Flugzeugs anzugeben. Insbesondere sollte sich das Fluggerät durch ein im Vergleich zu konventionellen Kipprotor-Flugzeugen besseres Betriebsverhalten auszeichnen.

Diese Aufgabe wird durch den Gegenstand des unabhängigen Patentanspruchs 1 gelöst. Vorteilhafte Ausgestaltungen des erfindungsgemäßen Fluggeräts sind Gegenstand der abhängigen Patentansprüche und ergeben sich aus der nachfolgenden Beschreibung der Erfindung.

Die Erfindung sieht vor, ein gattungsgemäßes Fluggerät, das zumindest eine Tragfläche und mindestens drei, (zumindest temporär) eine vertikale Schubrichtung aufweisende Triebwerke aufweist, dadurch zu verbessern, dass eine Steuerungseinheit vorgesehen ist, die eine Störung von einem oder mehreren der Triebwerke erkennt und die Leistung und/oder die die Schwenkstellung eines oder mehrerer der intakten Triebwerke zum Ausgleich des gestörten Triebwerks automatisch verändert.

Als "vertikal" wird erfindungsgemäß eine Schubrichtung verstanden, die nicht senkrecht zur Hochachse des Triebwerks steht und vorzugsweise kollinear oder parallel zur Hochachse ist oder mit dieser einen Winkel von maximal 45°, vorzugsweise maximal 20° und besonders bevorzugt maximal 10° einschließt. Als "quer zur Längsachse" wird erfindungsgemäß nicht notwendigerweise ein Winkel von 90° zur Längsachse verstanden.

Durch die erfindungsgemäße Ausbildung des gattungsgemäßen Fluggeräts kann das Betriebsverhalten eines gattungsgemäßen Fluggeräts bei einer Störung von zumindest einem der Triebwerke erheblich verbessert werden.

Die erfindungsgemäße Ausgestaltung eines Fluggeräts eignet sich insbesondere für die Verbesserung von sogenannten Kipprotor-Fluggeräten im Schwebeflug, so dass in einer bevorzugten Ausführungsform vorgesehen ist, dass mindestens zwei der Triebwerke um (mindestens) eine quer zur Längsachse des Fluggeräts verlaufende Achse verschwenkbar sind.

Bei einem gattungsgemäßen Fluggerät ist der Ausfall eines der Triebwerke insbesondere dann mit einer erheblichen Gefährdung verbunden, wenn sich dieses - beispielsweise während vertikaler Starts und Landungen - im Schwebeflug befindet, d.h. keine bzw. keine relevante Geschwindigkeitskomponente in Richtung der Längsachse des Fluggeräts aufweist. Um auch bzw. gerade im Schwebeflug den Ausfall eines oder mehrerer Triebwerke erfindungsgemäß kompensieren zu können, ist vorzugsweise vorgesehen, dass die Maximalschubkraft der Triebwerke derart ausgelegt sind, dass die für das Erreichen des Schwebeflugs im störungsfreien, bodennahen Betrieb erforderliche tatsächliche Schubkraft dieser Triebwerke unterhalb der Maximalschubkraft liegt (z.B. bei insgesamt sechs Triebwerken mit vertikaler Ausrichtung vorzugsweise bei nicht mehr als ca. 50% der Maximalschubkraft). Dadurch kann sichergestellt werden, dass der Ausfall zumindest eines Triebwerks hinsichtlich der Schubkraft durch die verbliebenen intakten Triebwerke kompensiert werden kann.

Vorzugsweise ist weiterhin vorgesehen, die Triebwerke als Propeller-Triebwerke auszubilden, da diese konstruktiv einfache und verbrauchsgünstig betreibbare Triebwerke darstellen.

Insbesondere ermöglicht die Ausbildung der Triebwerke mit Propellern, diese elektromotorisch anzutreiben, wodurch der Vorteil eines geräuscharmen Antriebs erzielt werden kann.

Vorzugsweise ist vorgesehen, dass die Anzahl der verschwenkbaren Triebwerke mindestens 4 beträgt und besonders bevorzugt geradzahlig ist und insbesondere 4, 6, oder 8 beträgt. Die Triebwerke können dann insbesondere in Paaren von Triebwerken vorgesehen sein, von denen das eine jeweils primär für die Kompensation des anderen, gestörten Triebwerks vorgesehen sein kann. Im übrigen ist mit der Ausstattung des erfindungsgemäßen Fluggeräts mit einer Vielzahl von Triebwerken der prinzipielle Vorteil verbunden, dass diese im aerodynamischen Horizontalflug mit geringer Schubkraft, bei Propeller-Triebwerken also mit geringer Drehzahl) und folglich geringer Geräuschentwicklung betrieben werden können. Weiterhin bevorzugt kann dann vorgesehen sein, diese mindestens vier Triebwerke in einer zur Längsachse des Fluggeräts symmetrischen Anordnung vorzusehen, wobei diese weiterhin bevorzugt in zumindest zwei Gruppen mit voneinander unabhängiger Energieversorgung unterteilt sind. Dies kann sowohl in geometrischer als auch funktionaler Hinsicht die Kompensation eines oder mehrerer gestörter Triebwerke vereinfachen. Die Aufteilung der Triebwerke in die zumindest zwei Gruppen kann dabei vorzugsweise so gewählt werden, dass die einzelnen Triebwerke jeder der Gruppen in einer zur Längsachse des Fluggeräts symmetrischen Anordnung positioniert sind.

In einer bevorzugten Ausführungsform des erfindungsgemäßen Fluggeräts weist dieses einen Rumpf und jeweils mindestens eine, sich seitlich von dem Rumpf erstreckende Tragfläche auf, wobei auf jeder Seite des Rumpfs zumindest ein Triebwerk mit zumindest einer der dortigen Tragflächen verbunden ist. Dadurch können zumindest zwei der mindestens drei Triebwerke des erfindungsgemäßen Fluggeräts vorteilhaft in die stabile Tragstruktur der Tragflächen integriert werden. Ein drittes und besonders bevorzugt auch ein viertes Triebwerk kann dann vorzugsweise an dem Rumpf und insbesondere im Heckbereich des Rumpfs angeordnet sein, so dass sich eine symmetrische (bezogen auf die Längsachse des Fluggeräts) Anordnung der Triebwerke ergeben kann.

Weiterhin ist vorzugsweise vorgesehen, dass die mit den Tragflächen verbundenen Triebwerke bei einer Ausbildung als Propeller-Triebwerke derart ist, dass die Entfernung der Rotationsachse des Propellers von dem Rumpf nur geringfügig größer als der Radius der Propeller ist. Dadurch kann erreicht werden, dass die Triebwerke möglichst nah an dem Rumpf positioniert sind, wodurch die Momente um die Hauptachsen des Fluggeräts bei einem Ausfall eines Triebwerks gering gehalten werden kann.

Hierfür kann insbesondere vorgesehen sein, dass die Triebwerke über (jeweils) einen Tragarm mit den Tragflächen und/oder dem Rumpf verbunden sind. Dabei sollten die Tragarme derart angeordnet und/oder ausgebildet sein, dass die Triebwerke zumindest zwischen einer horizontalen (d.h. die Richtung des von den Triebwerken erzeugten Schubs verläuft senkrecht zu der Hochachse des Fluggeräts und vorzugsweise koaxial oder parallel zur Längsachse des Fluggeräts) und einer vertikalen Lage (d.h. die Richtung des von den Triebwerken erzeugten Schubs verläuft senkrecht zu der Längsachse des Fluggeräts und vorzugsweise koaxial oder parallel zur Hochachse des Fluggeräts) verschwenkbar sind.

Die erfindungsgemäße Ausgestaltung eines Fluggeräts eignet sich insbesondere zur Verbesserung eines Motorseglers und weist somit vorzugsweise eine Gleitzahl von ≥ ca. 20 auf.

Ein wesentlicher Vorteil eines Motorseglers ist die Möglichkeit, diesen auch antriebslos fliegen zu lassen, sobald eine ausreichende Flughöhe erreicht ist. Demgemäß ist in einer bevorzugten Ausführungsform vorgesehen, die Propeller als sogenannte Klapppropeller (z.B. als Feder-Zentrifugal-Klapppropeller) auszuführen. Diese weisen Propellerflügel auf, die jeweils um eine Achse, die quer zu der Rotationsachse des Propellers angeordnet ist, verschwenkbar sind. Diese können somit im antriebslosen Flug angeklappt werden, wodurch sich der Luftwiderstand des Fluggeräts erheblich verringert.

Weiterhin kann vorgesehen sein, dass die Triebwerke des erfindungsgemäßen Fluggeräts um mehr als 90° verschwenkbar sind. Dadurch kann der Bereich der möglichen Schubrichtung vergrößert und damit die Manövrierfähigkeit des Fluggeräts erhöht werden.

Das erfindungsgemäße Fluggerät kann erfindungsgemäß als Ein- oder Doppelrumpf-Konfiguration, mit konventionellem, T- oder V-Leitwerk sowie als Ein -, Doppel- oder Mehrdecker aufgebaut sein.

Weiterhin können die Umlaufkreisdurchmesser der Propeller-Triebwerke gleich oder verschieden sein.

Auch kann das Verschwenken der Triebwerke starr koordiniert sein oder voneinander unabhängig erfolgen (wobei jedoch bei Start und Landung eine Parallel-Koordination der Verschwenkbewegungen für vertikale Schubkräfte erforderlich sein kann). Auch ist es erfindungsgemäß unerheblich, ob alle oder nur einige Triebwerke um eine, zwei oder mehr Achsen schwenkbar sind oder ob die Schwenkachse bzw. die Schwenkachsen parallel zu Symmetrieachsen des Fluggeräts oder zueinander stehen.

Zudem kann die Anordnung der Triebwerke symmetrisch oder unsymmetrisch zu den Achsen des Fluggeräts sein und können die Propeller der Triebwerke sich in einer gemeinsamen Ebene oder parallelen Ebenen oder nicht-parallelen Ebenen sowie in gleichem oder entgegengesetztem Drehsinn drehen. Beispielsweise können aus Steuerungsgründen grundsätzlich geringe Schrägstellungen der Längsachse der Triebwerke zueinander vorgewählt sein oder auch nicht.

Im aerodynamischen Horizontalflug kann vorgesehen sein, dass alle oder nur einige der Triebwerke entsprechend verschwenkt sind bzw. alle oder nur einige Triebwerke Schubkraft erzeugen.

Ein Vorteil der Erfindung besteht darin, dass das vorzugsweise senkrechtstartfähige Fluggerät im aerodynamischen Flug "übermotorisiert" ist, d.h. nur einen Teil der im vertikalen Auf- und Abstiegsflug erforderlichen Leistung benötigt, so dass die Triebwerke mit verringerter Drehzahl laufen oder sogar vereinzelte Triebwerke abgeschaltet werden können. Durch die - im Vergleich zu horizontal startenden und landenden Starrflüglern - vorzugsweise groß gewählten Umlaufkreisdurchmesser der Propeller-Triebwerke kann die Drehzahl ohnehin geringer gewählt werden, wodurch sich der Fluglärm verringert.

Die Erfindung wird nachfolgend anhand von in den Zeichnungen dargestellten Ausführungsbeispielen näher erläutert. In den Zeichnungen zeigt:
- Fig. 1:: eine erste Ausführungsform eines erfindungsgemäßen Fluggeräts in einer Draufsicht;
- Fig. 2:: das Fluggerät der Fig. 1 in einer Seitenansicht;
- Fig. 3:: eine zweite Ausführungsform eines erfindungsgemäßen Fluggeräts in einer Draufsicht;
- Fig. 4:: das Fluggerät der Fig. 3 in einer Seitenansicht;
- Fig. 5:: eine dritte Ausführungsform eines erfindungsgemäßen Fluggeräts in einer Draufsicht;
- Fig. 6:: das Fluggerät der Fig. 5 in einer Seitenansicht;
- Fig. 7:: eine vierte Ausführungsform eines erfindungsgemäßen Fluggeräts in einer Draufsicht; und
- Fig. 8:: das Fluggerät der Fig. 7 in einer Seitenansicht.

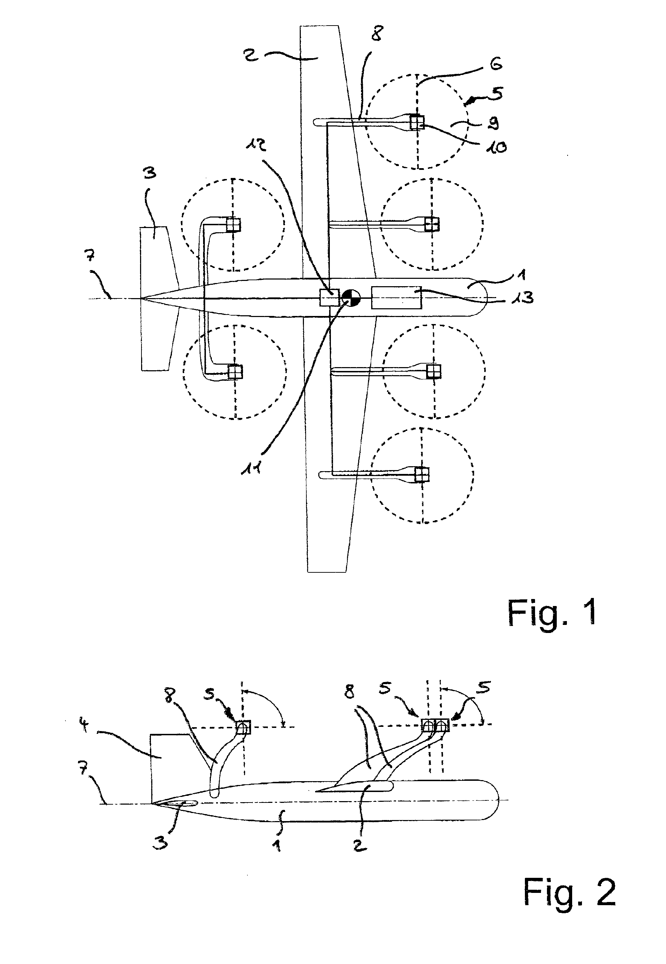

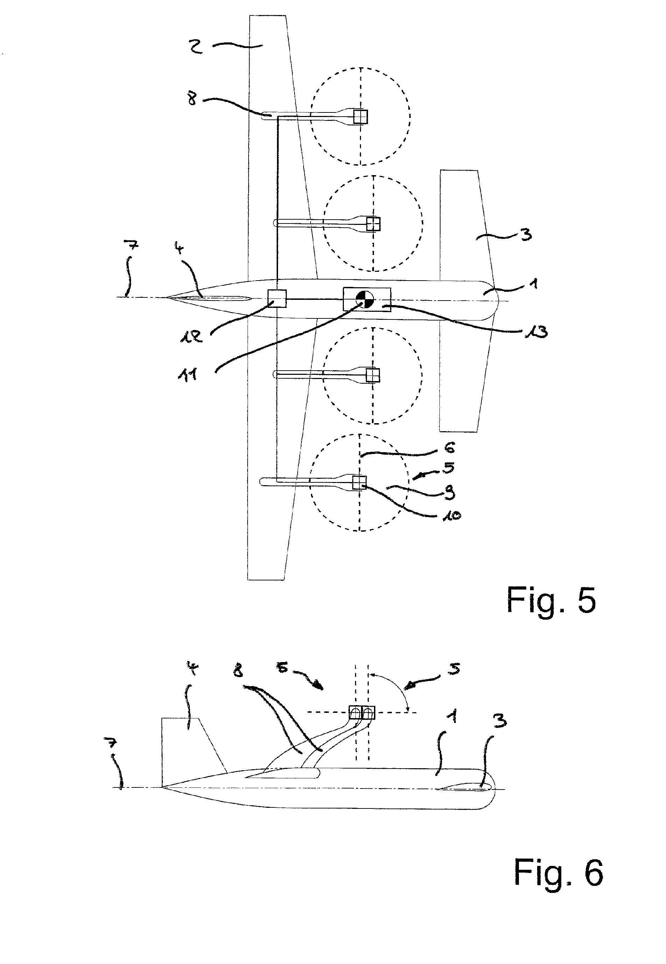

Die vier in den Figuren 1 bis 8 schematisch dargestellten Fluggeräte weisen jeweils einen Rumpf 1 auf. In einem Mittelbereich des Rumpfes 1 bei den Ausführungsformen gemäß den Fig. 1 bis 4 bzw. in einem hinteren Bereich des Rumpfes 1 bei der Ausführungsform gemäß den Fig. 5 bis 8 schließt sich an dessen beiden Seiten jeweils eine Tragfläche 2 an. Der Rumpf 1 umfasst einen Bug, der in Flugrichtung des Fluggeräts vorne liegt, sowie ein Heck. Im Bereich des Hecks weisen die Fluggeräte jeweils ein Seitenleitwerk 4 sowie - bei den Fluggeräten der Fig. 1 bis 4 - ein Höhenleitwerk 3 auf. Das Höhenleitwerk 3 bei den Fluggeräten gemäß den Fig. 5 bis 8 befindet sich dagegen in Bereich des Bugs. In den Zeichnungen sind zudem die Schwerpunkte 11 der jeweiligen Fluggeräte eingezeichnet.

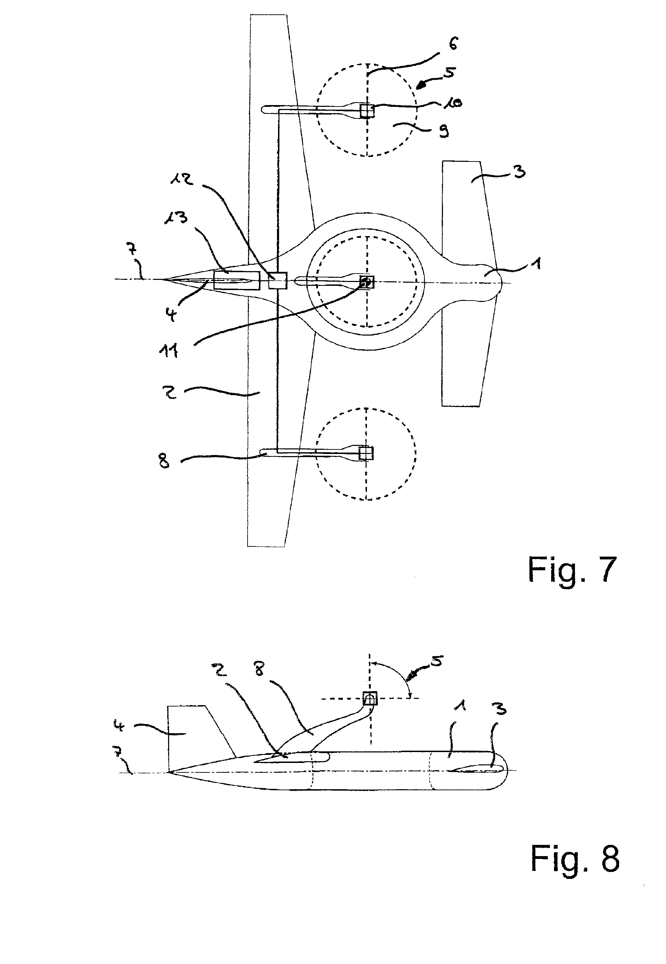

Die Fluggeräte sind mit drei (Fig. 7 und 8), vier (Fig. 5 und 6) bzw. sechs (Fig. 1 bis 4) Triebwerken 5 ausgestattet, die jeweils um einen Winkel von 90° um eine Achse 6, die senkrecht zu der Längsachse 7 des jeweiligen Fluggeräts liegt, verschwenkbar sind. Das Verschwenken kann insbesondere mittels einer mechanischen oder elektromechanischen Verschwenkvorrichtung erfolgen.

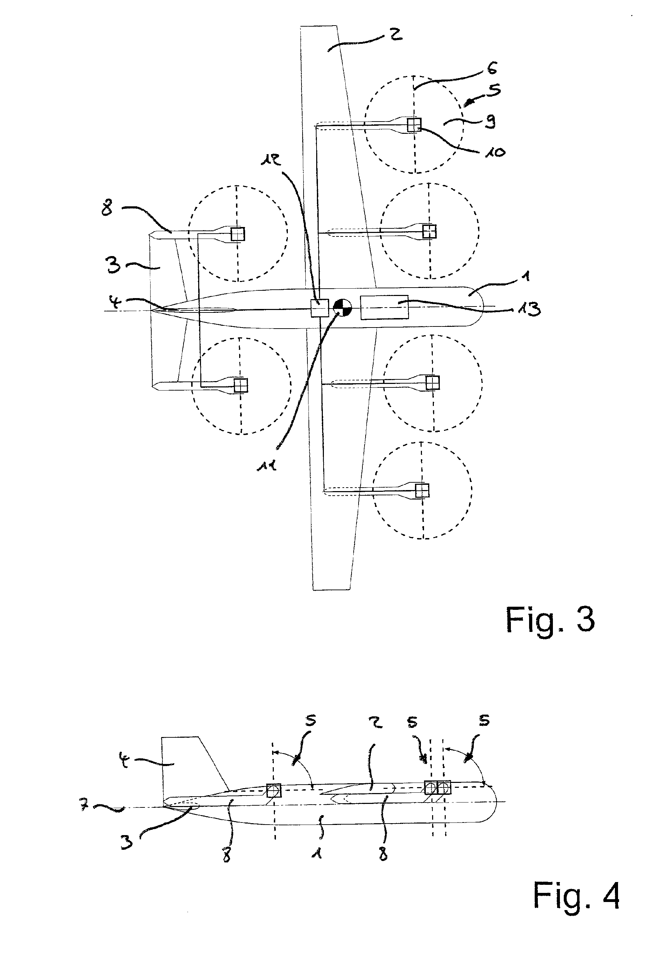

Sämtliche dieser Triebwerke 5 sind über jeweils einen Tragarm 8 mit dem Rumpf 1 bzw. den Tragflächen 2 des Fluggeräts verbunden. Die Tragarme 8 sind bei den Fluggeräten gemäß den Fig. 1 und 2 sowie 5 bis 8 S-förmig geschwungen ausgebildet und positionieren die Triebwerke 5 sowohl in Richtung der Längs- 7 als auch der Hochachse des Fluggeräts versetzt von der Befestigungsstelle des jeweiligen Tragarms 8 an den Tragflächen 2 bzw. dem Rumpf 1. Diese in Richtung der Hochachse versetzte Anordnung der Triebwerke 5 dient - neben der Bereitstellung eines ausreichend Schwenkraums - insbesondere auch dazu, mittels Schwenkbewegungen der Triebwerke Ausgleichsmomente zur Lagestabilisierung aufbringen zu können. Bei dem Fluggerät gemäß den Fig. 3 und 4 sind die Tragarme 8 im Wesentlichen geradlinig, parallel zur Längsachse 7 des Fluggeräts verlaufend ausgebildet.

Die Triebwerke 5 sind als Propeller-Triebwerke ausgebildet, wobei jeder der Propeller 9 (dargestellt durch einen gestrichelten Kreis) von einem eigenen elektrischen Antriebsmotor 10 rotierend angetrieben wird. Durch die Befestigung der Triebwerke 5 an dem Rumpf 1 bzw. an den Tragflächen 2 mittels der Tragarme 8 kann eine Kollision zwischen den Propellern 9 und dem Rumpf 1 bzw. den Tragflächen 2 bei sämtlichen, durch die Verschwenkbarkeit ermöglichten Positionen des Propellers 9 verhindert werden.

Bei dem Fluggerät gemäß den Fig. 1 und 2 sind jeweils zwei Triebwerke 5 mit jeder der Tragflächen 2 verbunden. Dabei sind die jeweils zwei Triebwerke sowohl in Richtung der Querachse als auch der Längsachse 7 des Fluggeräts voneinander versetzt angeordnet. Weiterhin sind zwei in Richtung der Querachse des Fluggeräts versetzt angeordnete Triebwerke 5 im Bereich des Hecks mit dem Rumpf 1 verbunden.

Die Ausführungsform gemäß den Fig. 3 und 4 unterscheidet sich - neben der Form der Tragarme 8 - im Wesentlichen dadurch von derjenigen der Fig. 1 und 2, dass die hinteren Triebwerke 5 nicht (über die Tragarme 8) an dem Rumpf 1, sondern an den beiden äußeren Enden des Höhenleitwerks 3 befestigt sind.

Bei dem Fluggerät gemäß den Fig. 5 und 6 sind - den Ausführungsformen gemäß den Fig. 3 bis 6 entsprechend - jeweils zwei Triebwerke 5 mit jeder der Tragflächen 2 verbunden, wobei die jeweils zwei Triebwerke 5 jeder Tragfläche 2 sowohl in Richtung der Querachse als auch der Längsachse 7 des Fluggeräts voneinander versetzt angeordnet sind. Weitere Triebwerke im Bereich des Hecks des Fluggeräts sind nicht vorhanden.

Bei der Ausführungsform gemäß den Fig. 7 und 8 weist das Fluggerät insgesamt drei, in etwa kollinear angeordnete Triebwerke 5 auf, von denen eines mit jeweils einer der Tragflächen 2 verbunden ist, während das dritte (lotrecht) oberhalb des Schwerpunkts 11 des Fluggeräts angeordnet und über einen Tragarm 8 mit dem Rumpf 1 verbunden ist. Der Rumpf 1 ist dabei mit einer Durchgangsöffnung versehen, deren Durchmesser mindestens dem Durchmesser des Propellers des mittleren Triebwerks 5 entspricht. Diese Durchgangsöffnung ermöglicht eine Strömung des von dem mittleren Triebwerk 5 erzeugten Schubstrahls ohne wesentliche Hindernisse.

Jedes der dargestellten Fluggeräte weist erfindungsgemäß eine Steuerungseinheit 12 auf, über die die den einzelnen Triebwerken 5 aus einer elektrischen Energiequelle 13 (z.B. in Form eines Akkumulators , eines Elektroaggregats oder einer Brennstoffzelle) zugeführte elektrische Leistung geregelt werden kann. Die Steuerungseinheit 12 ist weiterhin so ausgebildet, dass diese eine Störung eines oder mehrerer der Triebwerke 5 erkennt. Dies kann beispielsweise mittels eines oder mehrerer (nicht dargestellter) Lagewinkelbeschleunigungssensoren erfolgen. Wird eine Störung, z.B. ein Totalausfall, eines Triebwerks 5 erkannt, sorgt die Steuerungseinheit 12 automatisch für eine Kompensation der dadurch entstehenden Momente um die Hauptachsen des jeweiligen Fluggeräts (insbesondere ein Nickmoment um die Querachse und ein Rollmoment um die Längsachse 7) sowie des dadurch entstehenden Leistungsdefizits, indem die Leistung einzelner oder aller intakt gebliebener Triebwerke 5 gezielt erhöht wird. Dadurch kann eine stabile Fluglage trotz der Störung des Triebwerks 5 aufrecht gehalten werden.

Für das Fluggerät gemäß den Fig. 7 und 8 kann beispielsweise Folgendes gelten (eine identische Grund-Schubkraft (definiert als diejenige Schubkraft der einzelnen Triebwerke 5, die für den bodennahen Schwebeflug bei Funktion aller Triebwerke erforderlich ist) für die drei Triebwerke 5 vorausgesetzt): Fällt das mittlere Triebwerk aus, wird zur Kompensation der nicht mehr verfügbaren Schubkraft dieses Triebwerks 5 die Schubkraft der intakten verbliebenen, äußeren Triebwerke 5 von der Steuereinheit 12 automatisch auf jeweils 150% der Grund-Schubkraft erhöht. Fällt eines der äußeren Triebwerke 5 aus, so wird das zweite äußere Triebwerk 5 von der Steuereinheit 12 ebenfalls abgeschaltet und die Schubkraft des mittleren Triebwerks 5 auf 300% der Grund-Schubkraft erhöht.

## Patentansprüche

1. Fluggerät mit zumindest einer Tragfläche (2) und mindestens drei, eine vertikale Schubrichtung aufweisenden Triebwerken (5), **gekennzeichnet durch** eine Steuerungseinheit (12), die eine Störung zumindest eines der Triebwerke (5) erkennt und die Leistung der intakten Triebwerke (5) zum Ausgleich des gestörten Triebwerks (5) regelt.

2. Fluggerät nach Anspruch 1, **dadurch gekennzeichnet, dass** zumindest zwei der Triebwerke (5) um eine quer zur Längsachse (7) des Fluggeräts verlaufende Achse verschwenkbar sind.

3. Fluggerät nach Anspruch 1 oder 2, **dadurch gekennzeichnet, dass** die Maximalschubkraft der Triebwerke (5) derart ist, dass für das Erreichen eines Schwebeflugs die tatsächliche Schubkraft dieser Triebwerke (5) unterhalb der Maximalschubkraft liegt, sofern alle Triebwerke (5) intakt sind.

4. Fluggerät nach einem der vorhergehenden Ansprüche, **dadurch gekennzeichnet, dass** die Triebwerke (5) als Propeller-Triebwerke ausgebildet sind.

5. Fluggerät nach Anspruch 4, **dadurch gekennzeichnet, dass** die Propeller-Triebwerke elektromotorisch angetrieben sind.

6. Fluggerät nach einem der vorhergehenden Ansprüche, **dadurch gekennzeichnet, dass** die Anzahl der Triebwerke (5) geradzahlig ist.

7. Fluggerät nach Anspruch 6, **dadurch gekennzeichnet, dass** die Anordnung der Triebwerke (5) symmetrisch zur Längsachse (7) des Fluggeräts ist und diese in zumindest zwei Gruppen mit voneinander unabhängiger Energieversorgung unterteilt sind.

8. Fluggerät nach einem der vorhergehenden Ansprüche, **gekennzeichnet durch** einen Rumpf (1) und jeweils mindestens eine sich seitlich von dem Rumpf erstreckende Tragfläche (2), wobei auf jeder Seite des Rumpfs (1) zumindest ein Triebwerk (5) mit einer der dortigen Tragflächen (2) verbunden ist.

9. Fluggerät nach Anspruch 8, **dadurch gekennzeichnet, dass** die Entfernung einer Rotationsachse jedes der mit den Tragflächen (2) verbundenen Propeller-Triebwerke von dem Rumpf (1) nur geringfügig größer als der Radius der jeweiligen Propeller (9) ist.

10. Fluggerät gemäß einem der Ansprüche 8 oder 9, **dadurch gekennzeichnet, dass** zumindest eines der Triebwerke (5) über einen Tragarm (8) mit den Tragflächen (2) und/oder dem Rumpf (1) verbunden ist.

11. Fluggerät gemäß Anspruch 10, **dadurch gekennzeichnet, dass** der Tragarm (8) derart angeordnet und/oder ausgebildet ist, dass das Triebwerk (5) zwischen einer horizontalen und einer vertikalen Lage verschwenkbar ist.

12. Fluggerät gemäß einem der vorhergehenden Ansprüche, **gekennzeichnet durch** eine Gleitzahl von ≥ 20.

13. Fluggerät gemäß einem der Ansprüche 3 bis 12, **dadurch gekennzeichnet, dass** die Propeller (9) der Propeller-Triebwerke als Klapppropeller ausgebildet sind.

14. Fluggerät gemäß einem der vorhergehenden Ansprüche, **dadurch gekennzeichnet, dass** die Triebwerke (5) um mehr als 90° verschwenkbar sind.
